# EUROPÄISCHE PATENTSCHRIFT

(11) **EP 2 311 303 B1**
(45) Veröffentlichungstag und Bekanntmachung des Hinweises auf die Patenterteilung: **28.11.2012**
(21) Anmeldenummer: 10401172.1
(22) Anmeldetag: 08.10.2010
(51) Int. Cl.: A01C 17/00

(54) **Schleuderstreuer**
Centrifugal spreader
Epandeur d'engrais centrifuge

(30) Priorität: 13.10.2009 DE 102009044237
(43) Veröffentlichungstag der Anmeldung: 20.04.2011
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A1- 0 542 112
- EP-A1- 1 293 114
- EP-A1- 1 738 632

## Beschreibung

Die Erfindung betrifft einen Schleuderstreuer gemäß des Oberbegriffes des Patentanspruches 1.

Ein derartiger Schleuderstreuer ist beispielsweise durch die EP 17 38 632 B2 bekannt. Die Dosieröffnung der Dosierplatte ist mittels eines unter der Dosierplatte angeordneten Dosierschiebers in ihrer Öffnungsweite einstellbar. Zur Führung des Dosierschiebers in an die Unterseite der Dosierplatte anliegenden Weise ist ein flächenartiges Gleitlager vorgesehen. Dieses wird von der Oberfläche eines an der Dosierplatte befestigten Auslaufschachtes gebildet. Das Problem besteht nun darin, dass zwischen der Dosierplatte, dem Dosierschieber und/oder der oberen Fläche des Auslaufschachtes, die als Gleitlagerfläche dient, Dünger gelangen kann. Dies kann zum Verklemmen der zueinander verstellbaren Elemente führen.

Ein ähnlicher Schleuderstreuer ist aus EP1293114 bekannt, welche ebenfalls den Oberbegriff des Anspruchs 1 offenbart, jedoch dieselben Nachteile aufweist.

Der Erfindung liegt die Aufgabe zugrunde, eine verbesserte Gleitlagerausgestaltung einer Schieberlagerung an der Dosierplatte unter Minderung der Verklemmungsgefahr durch zwischen die zueinander verstellbaren Teile geratenen Düngerpartikel zu schaffen.

Diese Aufgabe wird erfindungsgemäß dadurch gelöst, dass die Gleitlagerung an der Bodenplatte befestigte und den Dosierschieber von unten tragende und ringsegmentförmig angeordnete Lagerflächenelemente aufweist, wobei die Lagerflächenelemente kammartig und/oder fingerartig ausgestaltet sind. Infolge dieser Maßnahmen sind nur sehr kleine Flächen im Bereich der Gleitlagerung vorhanden, zwischen welchen Material gelangen kann. Aufgrund der geringen Ausdehnung der kamm- oder fingerartigen Lagerflächenelemente ist die Gefahr der Verklemmung durch zwischen den bewegbaren Teilen gelagerten Materialpartikel fast völlig ausgeschlossen.

Eine vorteilhafte Ausgestaltung der den Dosierschieber tragenden Lageflächenelemente ergibt sich dadurch, dass die den Dosierschieber tragenden Lagerflächenelemente als strahlenförmig auf die Drehachse des Dosierschiebers ausgerichtete stabförmige und/oder stiftartige Lagermittel sind, dass zwischen den Lagermitteln nach unten und zur Drehlagerung des Schiebers offene Aussparungen sich befinden. Hierdurch wird eine materialarme und vorteilhafte Anordnung und Ausgestaltung der Lagerflächenelemente erreicht.

Auch können die Lagermittel zusätzlich nach außen hin offene Aussparungen aufweisen.

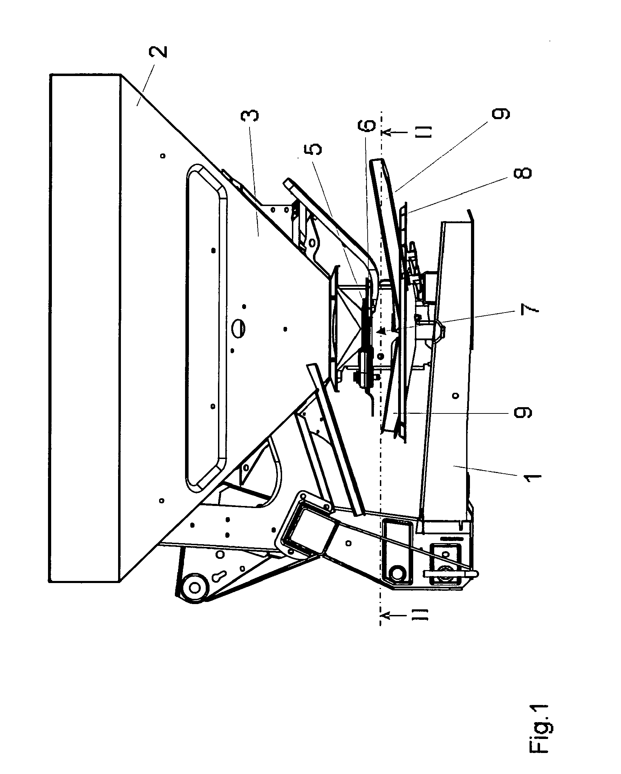

Weitere Einzelheiten der Erfindung sind der Beispielsbeschreibung und den Zeichnungen zu entnehmen. Hierbei zeigen
- Fig. 1: den Schleuderdüngerstreuer in Seitenansicht,
- Fig. 2: die Dosierplatte mit Dosierschieber in der Ansicht II - II,
- Fig. 3: die Anordnung der Dosierplatte und des Dosierschiebers in der Ansicht III - III,
- Fig. 4: die Ausbildung der Dosieröffnung in der Dosierplatte mit dem Dosierschieber nach Fig. 3 im vergrößerten Maßstab
- Fig. 5: das kammartige und/oder fingerartige Gleitlagerelement in perspektivischer Darstellung,
- Fig. 6: das Gleitlagerelement in der Ansicht VI - VI,
- Fig. 7: ein anders ausgestalteter wulstartiger Dichtring in der Darstellung und
- Fig. 8: ein weiterer wulstartiger Dichtring mit Dichtlippenelement in der Darstellung nah Fig. 4.

Der als Schleuderstreuer ausgebildete Zentrifugaldüngerstreuer weist den Rahmen 1 mit dem Vorratsbehälter 2 auf. Der Vorratsbehälter 2 weist das sich nach unten trichterförmig verjüngende Unterteil 3 auf, welches mit einer zumindest eine Dosieröffnung 4 aufweisenden Bodenplatte 5 abgeschlossen ist. Die Bodenplatte 5 weist eine Aussparung, die die Dosieröffnung 4 bildet, mit einer bestimmten Kontur auf. Die Dosieröffnung 4 ist mittels eines unterhalb der Bodenplatte 5 verstellbar angeordneten Dosierschiebers 6 verschließbar und in ihrer Öffnungsweite einstellbar. Unterhalb der von der Dosieröffnung 4 und dem Dosierschieber 6 gebildeten Dosiereinrichtung ist die rotierend angetriebene Schleuderscheibe 8 mit den darauf angeordneten Wurfschaufeln 9 angeordnet. Über die Dosieröffnung 4 wird im Zusammenwirken mit dem Schieber 6 das sich im Vorratsbehälter befindliche Material in einstellbaren Mengen der Schleuderscheibe 8 zugeführt. Mittels der Wurfschaufeln 9 wird das Material in Breitverteilung auf der Bodenoberfläche verteilt.

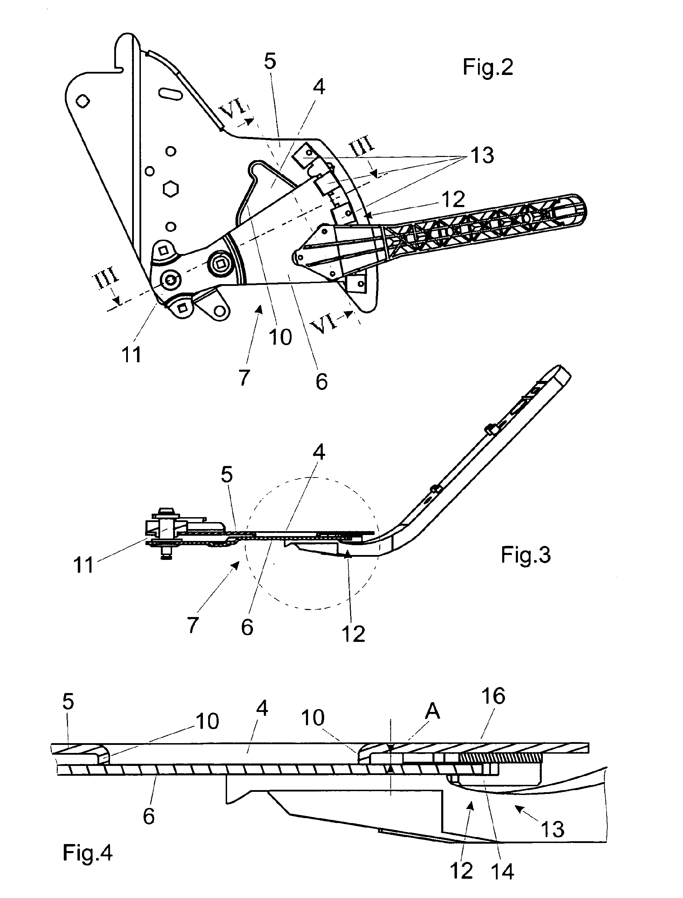

An der Unterseite der Bodenplatte 5 ist ein sich an die Dosieröffnung 4 unmittelbar anschließender konturengleich mit der Dosieröffnung umlaufender wulstartiger Dichtring 10 angeordnet, wie die Fig. 2 bis 4 zeigen. Der wulstartige Dichtring 10 weist die gleiche Kontur wie die Dosieröffnung 4 auf. In den Ausführungsbeispielen gemäß den Fig. 2 bis 4 ist der wulstartige Dichtring 10 durch Umprägung der Kante der Bodenplatte 5 im Bereich der Dosieröffnung 4 ausgestaltet. Unterhalb der Bodenplatte 5 ist der Dosierschieber 6 mit seiner Oberseite zumindest annähernd an die untere Fläche des wulstartigen Dichtringes 10 anliegend angeordnet. Der Dosierschieber 6 ist mittels eines Drehgelenkes 11 an der Bodenplatte 5 auf seiner einen Seite drehbar gelagert. Auf der dem Drehlager 11 abgewandten Seite ist der Dosierschieber 6 mittels einer Gleitlagerung 12 an der Bodenplatte 5 zusätzlich verschieblich gelagert, damit der Dosierschieber 6 eine definierte Position zu der Unterkante des wulstartigen Dichtringes 10 aufweist. Der Dosierschieber 6 ist mit nicht dargestellten Einstellelementen, die auch motorisch angetrieben ausgebildet sein können, in Positionen zu bringen, so dass die Dosieröffnung 4 zu verschließen bzw. in einer bestimmten Öffnungsweite einzustellen ist. Der Schieber 6 wirkt somit zumindest annähernd abdichtend mit dem wustartigen Dichtring 10 zusammen.

Der Abstand A zwischen der Bodenplatte 5 und dem Schieber 6 beträgt zwischen 4 mm und 10 mm, vorzugsweise 6 mm. Dieser Abstand A entspricht zumindest annähernd der Höhe des an die Bodenplatte 5 angeordneten wulstartigen Dichtringes 10, und zwar des Maßes, in dem der wulstartige Dichtring 10 die Unterseite der Bodenplatte 5 nach unten überragt.

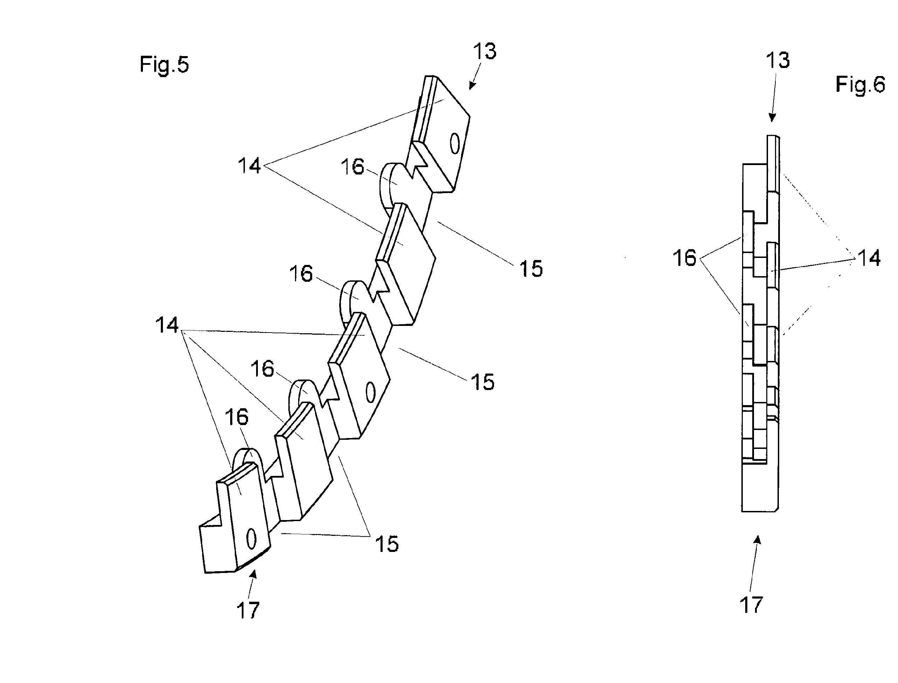

Die Gleitlagerung 12 weist an der Bodenplatte 5 befestigte und den Dosierschieber 6 von unten tragende und ringsegmentförmig angeordnete Lagerflächenelemente 13 auf. Hierbei sind die Lagerflächenelemente kamm- oder fingerartig ausgestaltet, wie die Fig. 2 bis 6 zeigen. Diese den Dosierschieber 6 tragende Lagerflächenelemente 13 sind als strahlenförmig auf die Drehachse des Lagers des Dosierschiebers 6 ausgerichtete stabförmige und/oder stiftförmige Lagermittel 14 ausgestaltet, wie insbesondere Fig. 2 zeigt. Zwischen den Lagermitteln 14 befinden sich nach unten und zur Drehlagerung 11 des Schiebers 6 offene Aussparungen 15. Um den Schieber 6 in dem vorgesehenen Abstand A zu der Bodenplatte 5 zu halten sind im Bereich der Gleitlagerung 12 zwischen der Bodenplatte 5 und dem Dosierschieber 6 an der Bodenplatte 5 befestigte Abstandselemente 16 angeordnet, wie die Fig. 3 und 4 zeigen. Diese Abstandselemente 16 sind kamm- oder fingerartig ausgestaltet, wie insbesondere der Fig. 5 zu entnehmen ist. Die Lagerflächenelemente 13 und Abstandselemente 16 sind zu einem Bauteil 17 zusammengefasst, wie insbesondere die Fig. 5 und 6 zeigen.

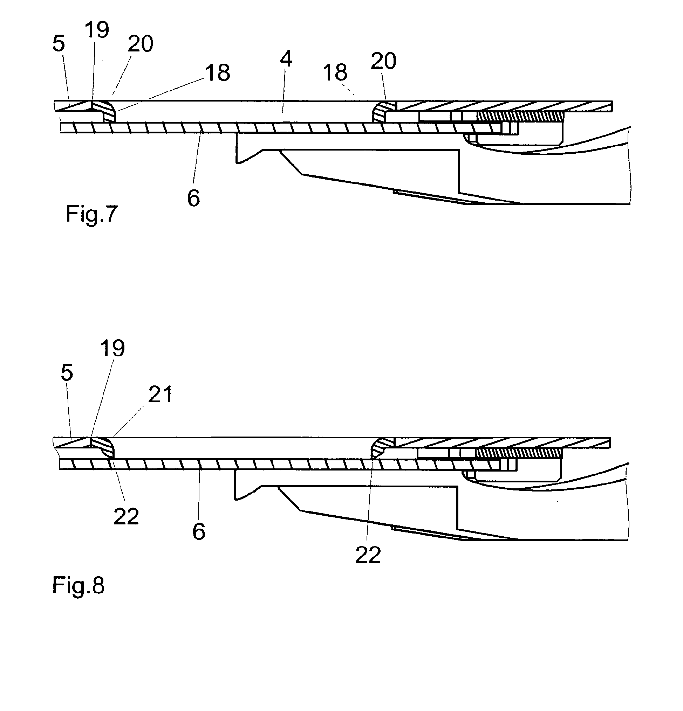

Gemäß den Fig. 7 und 8 ist das wulstartige Dichtelement 18 nicht als durch Prägung der Bodenplatte 5 ausgeformtes kragenartiges Element ausgestaltet. Vielmehr ist hier eine größere Aussparung 19 in der Bodenplatte 5 vorgesehen. In diese Aussparung 19 ist dann ein Einsatzelement 20 mit dem wulstartigen Dichtring 18, der eine Kontur der der Dosieröffnung entsprechenden Durchflussöffnung 4 aufweist, angeordnet.

Gemäß dem Ausführungsbeispiel nach Fig. 8 ist an dem wulstartigen Dichtring 21, welcher ebenfalls als Einsatzelement ausgebildet ist, ein mit dem Schieber 6 zumindest annähernd abdichtend zusammenwirkendes Dichtlippenelement 22 auf der Unterseite des wulstartigen Dichtringes 21 angeordnet, wie die Fig. 8 zeigt.

## Patentansprüche

1. Schleuderstreuer mit einem Vorratsbehälter, der zumindest ein sich zu einem Trichter verjüngendes Unterteil aufweist, welches mit einer zumindest eine Dosieröffnung aufweisenden Bodenplatte abgeschlossen ist, wobei die Dosieröffnung mit einem unterhalb der Bodenplatte verstellbar angeordnetem Dosierschieber verschließbar und in ihrer Öffnungsweite einstellbar ist, wobei der Dosierschieber zumindest teilweise mittels einer Gleitlagerung an der Bodenplatte geführt ist,
**dadurch gekennzeichnet, dass** die Gleitlagerung ( 12 ) an der Bodenplatte ( 5 ) befestigte und den Dosierschieber ( 6 ) von unten tragende und ringsegmentförmig angeordnete Lagerflächenelemente ( 13, 14 ) aufweist, wobei die Lagerflächenelemente ( 13, 14 ) kammartig und/oder fingerartig ausgestaltet sind.

2. Schleuderstreuer nach Anspruch 1, wobei der Dosierschieber ( 6 ) mittels eines Drehlagers ( 11 ) an der Bodenplatte ( 5 ) befestigt ist, **dadurch gekennzeichnet, dass** die den Dosierschieber ( 6 ) tragenden Lagerflächenelemente ( 13, 14 ) als strahlenförmig auf die Drehachse ( 11 ) des Dosierschiebers ( 6 ) ausgerichtete stabförmige und/oder stiftartige Lagermittel ( 14 ) sind, dass zwischen den Lagermitteln ( 14 ) nach unten und zur Drehlagerung ( 11 ) des Schiebers ( 6 ) offene Aussparungen ( 15 ) sich befinden.

## Claims

1. Centrifugal spreader with a storage container which has at least one lower part which tapers to form a funnel and is sealed off by a base plate having at least one metering opening, wherein the metering opening is closable, and the opening width thereof is adjustable, by means of a metering slide arranged adjustably below the base plate, wherein the metering slide is at least partially guided on the base plate by means of a plain bearing, **characterized in that** the plain bearing (12) has bearing surface elements (13, 14) which are fastened to the base plate (5) and support the metering slide (6) from below and are arranged in the shape of an annular segment, wherein the bearing surface elements (13, 14) are configured in the manner of a comb and/or in the manner of fingers.

2. Centrifugal spreader according to Claim 1, wherein the metering slide (6) is fastened to the base plate (5) by means of a rotary bearing (11), **characterized in that** the bearing surface elements (13, 14) supporting the metering slide (6) are in the form of rod-shaped and/or pin-like bearing means (14) oriented in a radiated manner with respect to the axis of rotation (11) of the metering slide (6), and **in that** recesses (15) which are open downwards and with respect to the rotary mounting (11) of the slide (6) are located between the bearing means (14).

## Revendications

1. Épandeur centrifuge comprenant un réservoir qui comprend au moins une partie inférieure se rétrécissant de manière à former un entonnoir, laquelle partie inférieure est fermée par une plaque de fond comprenant au moins une ouverture de dosage, l'ouverture de dosage pouvant être fermée par un tiroir de dosage disposé de manière déplaçable en dessous de la plaque de fond et sa largeur d'ouverture pouvant être ajustée, le tiroir de dosage étant guidé sur la plaque de fond au moins partiellement au moyen d'un palier lisse, **caractérisé en ce que** le palier lisse (12) comprend des éléments de surface de palier (13, 14) fixés à la plaque de fond (5), supportant le tiroir de dosage (6) par le dessous et disposés en forme de segment annulaire, les éléments de surface de palier (13, 14) étant configurés en forme de peigne et/ou en forme de doigts.

2. Épandeur centrifuge selon la revendication 1, le tiroir de dosage (6) étant fixé à la plaque de fond (5) au moyen d'un palier de rotation (11), **caractérisé en ce que** les éléments de surface de palier (13, 14) supportant le tiroir de dosage (6) sont des moyens de palier (14) en forme de barres et/ou en forme de chevilles alignés en forme de faisceau sur l'axe de rotation (11) du tiroir de dosage (6), et **en ce que** des évidements (15) ouverts vers le bas et en direction du palier de rotation (11) du tiroir (6) se situent entres les moyens de palier (14).
